# EUROPEAN PATENT APPLICATION

(11) **EP 4 693 482 A1**
(43) Date of publication of application: **11.02.2026**
(21) Application number: 24778855.7
(22) Date of filing: 20.02.2024
(51) Int. Cl.: H01M 4/505, C01G 53/00, H01M 4/36, H01M 4/525

(54) **POSITIVE ELECTRODE ACTIVE MATERIAL**

(30) Priority: 31.03.2023 JP 2023058477
(71) Applicant: Kaneka Corporation, Osaka-shi, Osaka 530-8288 (JP)
(72) Inventor: KOMA, Hiroto, Settsu-shi, Osaka 566-0072 (JP); IMAIZUMI, Junichi, Settsu-shi, Osaka 566-0072 (JP); KIKUCHI, Takashi, Settsu-shi, Osaka 566-0072 (JP)
(74) Representative: Vossius & Partner Patentanwälte Rechtsanwälte mbB
(86) International application number: PCT/JP2024/006017
(87) International publication number: WO 2024/202711

(57) **Abstract**

The present invention provides a positive electrode active substance having a layered rock-salt structure and having an initial charge capacity larger than that of a conventional technology. The positive electrode active substance is obtained by adding an additive containing boron element to a lithium composite oxide having a layered rock-salt structure represented by Li₂Mn₁₋ₓNiₓO₃ (0 ≤ x < 1) or a precursor of the lithium composite oxide such that an amount of boron is more than 0.00075 equivalents and 0.2 equivalents or less with respect to 1 equivalent of a total of Mn and Ni of the lithium composite oxide, and performing heating and sintering.

## Description

### TECHNICAL FIELD

The present invention relates to a positive electrode active substance.

### BACKGROUND ART

In recent years, demand for lithium-ion secondary batteries has further increased to be used in electric vehicles, large energy storage systems, and devices requiring high energy density.

Thus, Li-rich nickel-manganese oxide having a layered structure capable of exhibiting a high capacity has attracted attention (for example, Patent Document 1).

### PRIOR ART DOCUMENT

### PATENT DOCUMENT

Patent Document 1: JP 2011-129269 A

### DISCLOSURE OF INVENTION

### TECHNICAL PROBLEM

However, the Li-rich nickel-manganese oxide of Patent Document 1 has a small initial charge capacity and needs to be activated by repeating charging and discharging for about several tens of cycles to develop a target high capacity. Thus, there is room for further improvement.

An object of the present invention is to provide a positive electrode active substance having a layered rock-salt structure and having an initial charge capacity larger than that of a conventional technology.

### SOLUTION TO PROBLEM

One aspect of the present invention to solve the problem described above is a positive electrode active substance obtained by adding an additive containing boron element to a lithium composite oxide having a layered rock-salt structure represented by Li₂Mn₁₋ₓNiₓO₃ (0 ≤ x < 1) or a precursor of the lithium composite oxide such that an amount of boron is more than 0.00075 equivalents and 0.2 equivalents or less with respect to 1 equivalent of a total of Mn and Ni of the lithium composite oxide, and performing heating and sintering.

The "precursor of the lithium composite oxide" as used herein refers to a substance at a stage before the lithium composite oxide is produced.

According to this aspect, the positive electrode active substance is formed by adding an additive containing boron element to a lithium composite oxide or a precursor of the lithium composite oxide such that the amount of boron is more than 0.00075 equivalents and 0.2 equivalents or less with respect to 1 equivalent of the total of Mn and Ni of the lithium composite oxide. Thus, the positive electrode active substance has an initial charge capacity larger than that of the conventional technology while having a layered rock-salt structure.

In a preferred aspect, the positive electrode active substance is obtained by adding the additive to the lithium composite oxide or the precursor of the lithium composite oxide such that the amount of boron is 0.005 equivalents or more and 0.1 equivalents or less with respect to 1 equivalent of the total of Mn and Ni of the lithium composite oxide, and performing heating and sintering.

In a preferred aspect, the positive electrode active substance is obtained by performing heating and sintering at a temperature of 850°C or higher.

In a preferred aspect, a charging curve showing a voltage based on lithium metal with respect to a charge capacity when constant current charging is performed at a current density of 10 mA/g for the first time has a peak in a range of 4.7 V or more and 4.8 V or less.

In a preferred aspect, an initial charge capacity per 1 g is 250 mAh/g or more when constant current charging is performed at a current density of 10 mA/g until a voltage reaches 4.8 V based on lithium metal, and constant voltage charging is performed until the current density attenuates to 1 mA/g while 4.8 V based on lithium metal is maintained.

In a preferred aspect, an initial discharge capacity per 1 g is 150 mAh/g or more when constant current charging is performed at a current density of 10 mA/g until the voltage reaches 4.8 V based on lithium metal, then constant voltage charging is performed until the current density attenuates to 1 mA/g while 4.8 V based on lithium metal is maintained, and further constant current discharging is performed at a current density of 10 mA/g until the voltage reaches 2.0 V based on lithium metal.

In a preferred aspect, when a charge-discharge cycle is performed ten times, the charge-discharge cycle including a charging operation of performing constant current charging at a current density of 10 mA/g until a voltage reaches 4.8 V based on lithium metal and then performing constant voltage charging until the current density attenuates to 1 mA/g while 4.8 V based on lithium metal is maintained and a discharging operation of performing constant current discharging at a current density of 10 mA/g until the voltage reaches 2.0 V based on lithium metal, a discharge capacity per 1 g in the tenth discharging operation is 1.5 times or less the discharge capacity per 1 g in the first discharging operation.

In a preferred aspect, the additive contains lithium tetraborate.

In a preferred aspect, a part of Mn and/or Ni in the lithium composite oxide is substituted with boron element.

In a preferred aspect, a boron compound is attached to the lithium composite oxide.

The aspects described above can be mutually dependent, some configurations can be cited, or some configurations can be replaced between the aspects as long as the aspects are included in the technical scope of the present invention.

### EFFECT OF INVENTION

The positive electrode active substance of the present invention has an initial charge capacity larger than that of the conventional technology while having a layered rock-salt structure.

### BRIEF DESCRIPTION OF DRAWINGS

Fig. 1 is a cross-sectional view conceptually illustrating a lithium-ion secondary battery according to a first embodiment of the present invention.
Fig. 2 are graphs illustrating charge-discharge curves of Example 1 and Comparative Example 1 of the present invention, in which Fig. 2A illustrates a charge-discharge curve of Example 1, and Fig. 2B illustrates a charge-discharge curve of Comparative Example 1.

### BEST MODE FOR CARRYING OUT THE INVENTION

Hereinafter, embodiments of the present invention will be described in detail.

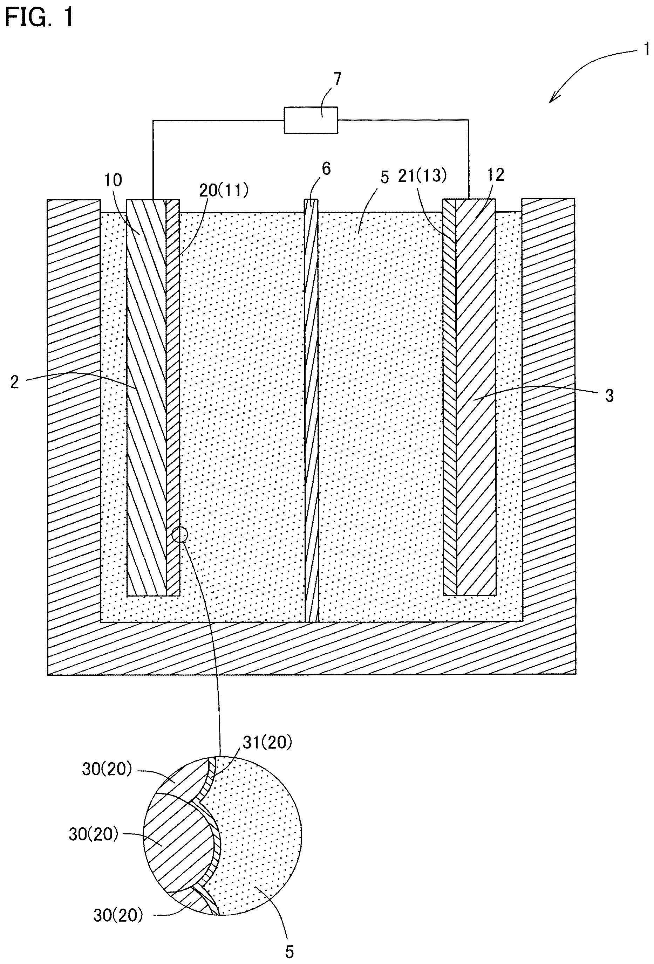

As illustrated in Fig. 1, a lithium-ion secondary battery 1 according to a first embodiment of the present invention includes a positive electrode 2, a negative electrode 3, an electrolyte 5, and a separator 6. An external load 7 can be connected to the positive electrode 2 and the negative electrode 3.

As illustrated in Fig. 1, the positive electrode 2 is formed by stacking a positive electrode active substance layer 11 on a positive electrode current collector 10. The positive electrode is an intercalation electrode capable of inserting and extracting lithium-ions.

The positive electrode active substance layer 11 includes a positive electrode active substance 20, a conductive auxiliary agent, and a binder.

The negative electrode 3 is formed by stacking a negative electrode active substance layer 13 on a negative electrode current collector 12. The negative electrode is an intercalation electrode capable of inserting and extracting lithium-ions.

The negative electrode active substance layer 13 includes a negative electrode active substance 21, a conductive auxiliary agent, and a binder.

As illustrated in the enlarged view of Fig. 1, the positive electrode active substance 20 is a coated positive electrode active substance in which a surface of the oxide active substance 30 is coated with a coating layer 31.

### <Oxide Active Substance 30>

The oxide active substance 30 is a lithium-ion conductive active substance, and the average potential of lithium extraction and lithium insertion of the oxide active substance is preferably 4.5 V or more and 5.0 V or less with respect to the Li deposition potential (also referred to as vs. Li⁺/Li). That is, the oxide active substance 30 preferably has an operation potential of 4.5 V or more and 5.0 V or less based on lithium metal as a single body.

The potential (hereinafter, also referred to as voltage)(vs. Li⁺/Li) of the lithium-ion insertion-extraction reaction can be obtained, for example, by measuring charge-discharge characteristics of a half-cell having a working electrode using the oxide active substance 30 and lithium metal as a counter electrode, and reading the voltage values at the start and end of the plateau. When there are two or more plateaus, the plateau of the lowest voltage value may be 4.5 V (vs. Li⁺/Li) or more, and the plateau of the highest voltage value may be 5.0 V (vs. Li⁺/Li) or less.

The oxide active substance 30 has a layered rock-salt type crystal structure represented by Formula (1) shown below, and has Li-rich type lithium-manganese-nickel oxide as a basic skeleton.

Li₂Mn₁₋ₓNiₓO₃ (0 ≤ x < 1) ... (1)

In the oxide active substance 30, a part of sites of the layered rock-salt type lithium-manganese-nickel oxide are preferably substituted with boron, and more preferably, the oxide active substance is formed of a layered rock-salt type lithium-manganese-nickel-boron oxide represented by Formula (2) shown below.

Li_{2+y}Mn₁₋ₓNi_{x-y}B_{y}O_{3-x+2y} ... (2)

wherein 0 < x < 1, 0 < y < 1, and 0 ≤ x - y < 1.

### <Coating Layer 31>

The coating layer 31 contains at least boron element, and is preferably formed of a boron oxide or a lithium-boron compound.

### <Negative Electrode Active Substance 21>

The negative electrode active substance 21 is not particularly limited, and for example, lithium titanate or the like can be used.

### <Conductive Auxiliary Agent>

The conductive auxiliary agent used for the positive electrode active substance layer 11 and/or the negative electrode active substance layer 13 is not particularly limited, but a carbon material is preferable.

The carbon material is preferably at least one selected from natural graphite, artificial graphite, vapor grown carbon fiber, carbon nanotube, acetylene black, ketjen black, and furnace black.

The amount of the conductive auxiliary agent contained in the positive electrode active substance layer 11 is preferably 1 part by weight or more and 30 parts by weight or less with respect to 100 parts by weight of the positive electrode active substance 20.

The amount of the conductive auxiliary agent contained in the negative electrode active substance layer 13 is preferably 1 part by weight or more and 30 parts by weight or less with respect to 100 parts by weight of the negative electrode active substance 21.

By setting the amounts within the ranges, the adhesiveness of the active substance layers 11 and 13 with the binder is maintained while the conductivity of the active substance layers is secured, and the adhesiveness with the current collectors 10 and 12 can be sufficiently obtained.

### <Binder>

The binder used in the positive electrode active substance layer 11 and/or the negative electrode active substance layer 13 is not particularly limited, but for each of the active substance layers 11 and 13, for example, at least one selected from the group consisting of polyvinylidene fluoride (PVdF), polytetrafluoroethylene (PTFE), styrene-butadiene rubber, polyimide, and derivatives thereof can be used.

The amount of the binder contained in the positive electrode active substance layer 11 is preferably 1 part by weight or more and 30 parts by weight or less with respect to 100 parts by weight of the positive electrode active substance 20.

The amount of the binder contained in the negative electrode active substance layer 13 is preferably 1 part by weight or more and 30 parts by weight or less with respect to 100 parts by weight of the negative electrode active substance 21.

By setting the amounts within the ranges, the adhesiveness between the active substances 20 and 21 and the conductive auxiliary material is maintained, and the adhesiveness with the current collectors 10 and 12 can be sufficiently obtained.

### <Current Collectors 10 and 12>

The current collectors 10 and 12 are not particularly limited, but are preferably made of aluminum or an aluminum alloy because they are stable under a positive electrode reaction atmosphere and a negative electrode reaction atmosphere.

As the current collectors 10 and 12, it is also possible to use those in which a surface of a metal other than aluminum (copper, SUS, nickel, titanium, or an alloy thereof) is coated with a metal that does not react at the potential of the positive electrode 2 or the potential of the negative electrode 3.

### <Electrolyte 5>

The electrolyte 5 is not particularly limited as long as it has lithium-ion conductivity, but a nonaqueous electrolytic solution obtained by dissolving a solute in a nonaqueous solvent, a gel electrolyte obtained by impregnating a polymer with a nonaqueous electrolytic solution obtained by dissolving a solute in a nonaqueous solvent, or the like can be used. The electrolyte 5 may be in a solid form or may be a solid electrolyte.

The electrolyte 5 may be included in the positive electrode 2, the negative electrode 3, and the separator 6 in advance, or may be added after interposing the separator 6 between the positive electrode 2 side and the negative electrode 3 side then winding or stacking them.

### <Separator 6>

The separator 6 may have any structure as long as it is provided between the positive electrode 2 and the negative electrode 3 and can contain the electrolyte 5 while having insulation properties.

Examples of the separator 6 include nylon, cellulose, polysulfone, polyethylene, polypropylene, polybutene, polyacrylonitrile, polyimide, polyamide, polyethylene terephthalate, and woven fabrics, nonwoven fabrics, and microporous membranes obtained by combining two or more of them.

The separator 6 may contain various plasticizers, antioxidants, and flame retardants, or may be coated with a metal oxide or the like.

Subsequently, a method for producing the lithium-ion secondary battery 1 of the present embodiment will be described.

The method for producing the lithium-ion secondary battery 1 of the present embodiment mainly includes an active substance forming step of forming the positive electrode active substance 20, a positive electrode forming step of forming the positive electrode 2, a negative electrode forming step of forming the negative electrode 3, and a secondary battery assembling step of assembling the positive electrode 2, the negative electrode 3, and the electrolyte 5. The negative electrode forming step and the secondary battery assembling step are the same as the conventional steps, and thus the description thereof is omitted.

### <Active Substance Forming Step>

The active substance forming step includes a mixing step and a heating step.

### (Mixing Step)

The mixing step is a step of mixing a lithium composite oxide or a precursor of the lithium composite oxide with an additive containing boron element to form a mixture.

The lithium composite oxide used in the mixing step is a precursor of the oxide active substance 30, and is a Li-rich type lithium-manganese-nickel oxide having a layered rock-salt type crystal structure represented by Formula (3) shown below.

Li₂Mn₁₋ₓNiₓO₃ (0 ≤ x < 1) ... (3)

The precursor of the lithium composite oxide used in the mixing step is a precursor of a manganese-nickel oxide represented by Formula (3), including a lithium material containing lithium element, a manganese material containing manganese element, and a nickel material containing nickel element.

The lithium material is not particularly limited as long as it contains lithium element, and for example, lithium carbonate, lithium hydroxide, or the like can be used.

The manganese material is not particularly limited as long as it contains manganese element, and for example, manganese oxide, manganese carbonate, manganese sulfate, or the like can be used.

The nickel material is not particularly limited as long as it contains nickel element, and for example, nickel oxide, nickel sulfate, or the like can be used.

As the precursor of the lithium composite oxide, a manganese-nickel material containing manganese element and nickel element may be used instead of the manganese material and the nickel material.

The additive used in the mixing step is not particularly limited as long as it contains boron element, and for example, lithium tetraborate (Li₂B₄O₇) or the like can be used.

The amount of the additive added in the mixing step is such an amount that the amount of boron in the additive is more than 0.00075 equivalents and 0.2 equivalents or less, preferably 0.0005 equivalents or more and 0.1 equivalents or less, with respect to 1 equivalent of the total of Mn and Ni of the lithium composite oxide.

### (Heating Step)

The heating step is a step of heating the mixture mixed in the mixing step under an oxygen atmosphere to form the positive electrode active substance 20.

The heating temperature in the heating step is a temperature at which the mixture is sintered, and is 850°C or higher.

The heating temperature in the heating step can be appropriately set according to the heating time, but is preferably 1200°C or lower.

The heating time in the heating step can be appropriately set according to the heating temperature, and is preferably 6 hours or more, and more preferably 10 hours or more.

The heating time in the heating step is preferably 48 hours or less, more preferably 36 hours or less, and still more preferably 24 hours or less.

### <Positive Electrode Forming Step>

The positive electrode forming step includes a positive electrode applying step and a positive electrode drying step.

### (Positive Electrode Applying Step)

The positive electrode applying step is a step of mixing the positive electrode active substance 20 obtained in the active substance forming step with a conductive auxiliary agent and a binder to produce a positive electrode mixture, and applying the positive electrode mixture to the positive electrode current collector 10.

The binder used in the positive electrode applying step is preferably dissolved or dispersed in a nonaqueous solvent or water from the viewpoint of ease of producing the positive electrode 2 and the negative electrode 3.

The nonaqueous solvent is not particularly limited, and examples thereof include N-methyl-2-pyrrolidone (NMP), dimethylformamide, dimethylacetamide, methyl ethyl ketone, methyl acetate, ethyl acetate, and tetrahydrofuran. A dispersant and a thickener may be added to these nonaqueous solvents.

### (Positive Electrode Drying Step)

The positive electrode drying step is a step of drying the positive electrode current collector 10 coated with the positive electrode mixture in the positive electrode applying step to form the positive electrode 2.

The positive electrode 2 formed in the positive electrode forming step described above is assembled together with the negative electrode 3 formed in the negative electrode forming step and the electrolyte 5 in the same manner as in the conventional technology, whereby the lithium-ion secondary battery 1 is completed.

Subsequently, the physical properties obtained when the positive electrode 2 used in the lithium-ion secondary battery 1 of the present embodiment is charged and discharged will be described.

The following physical properties will be described for a case where charging and discharging are performed by alternately repeating a charging operation and a discharging operation. The charging operation is an operation of performing constant current charging at a current density of 10 mA/g until the voltage reaches 4.8 V based on lithium metal at 25°C in an inert gas atmosphere and performing constant voltage charging until the current density attenuates to 1 mA/g while maintaining 4.8 V based on lithium metal. The discharging operation is an operation of performing constant current discharging at a current density of 10 mA/g until the voltage reaches 2.0 V based on lithium metal. Charging and discharging are performed starting from the charging operation, and one charging operation and one discharging operation are regarded as one cycle.

In the first charging operation of the positive electrode 2, it is preferable that a charging curve indicating a voltage based on lithium metal with respect to a charge capacity has a peak in a range of 4.7 V or more and 4.8 V or less.

In the first charging operation, the positive electrode 2 has a charge capacity of preferably 250 mAh/g or more, and particularly preferably 280 mAh/g or more per 1 g of the positive electrode active substance 20.

In the first discharging operation, the positive electrode 2 has a discharge capacity of preferably 150 mAh/g or more, and particularly preferably 170 mAh/g or more per 1 g of the positive electrode active substance 20.

When the charge-discharge cycle is performed twice, the charge capacity of the positive electrode 2 per 1 g of the positive electrode active substance 20 in the second charging operation is preferably 0.75 times or less the charge capacity per 1 g of the positive electrode active substance 20 in the first charging operation.

When the charge-discharge cycle is performed twice, the charge capacity of the positive electrode 2 per 1 g of the positive electrode active substance 20 in the second charging operation is preferably 0.5 times or more, more preferably 0.55 times or more the charge capacity per 1 g of the positive electrode active substance 20 in the first charging operation.

When the charge-discharge cycle is performed twice, the discharge capacity of the positive electrode 2 per 1 g of the positive electrode active substance 20 in the second discharging operation is preferably 1.2 times or less, more preferably 1.15 times or less the discharge capacity per 1 g of the positive electrode active substance 20 in the first discharging operation.

When the charge-discharge cycle is performed twice, the discharge capacity of the positive electrode 2 per 1 g of the positive electrode active substance 20 in the second discharging operation is preferably 0.8 times or more, more preferably 0.9 times or more, still more preferably 1 time or more the discharge capacity per 1 g of the positive electrode active substance 20 in the first discharging operation.

When the charge-discharge cycle is performed ten times, the charge capacity of the positive electrode 2 per 1 g of the positive electrode active substance 20 in the tenth charging operation is preferably 0.85 times or less the charge capacity per 1 g of the positive electrode active substance 20 in the first charging operation.

When the charge-discharge cycle is performed ten times, the charge capacity of the positive electrode 2 per 1 g of the positive electrode active substance 20 in the tenth charging operation is preferably 0.5 times or more, more preferably 0.55 times or more the charge capacity per 1 g of the positive electrode active substance 20 in the first charging operation.

When the charge-discharge cycle is performed ten times, the discharge capacity of the positive electrode 2 per 1 g of the positive electrode active substance 20 in the tenth discharging operation is preferably 1.5 times or less, more preferably 1.3 times or less, still more preferably 1.2 times or less the discharge capacity per 1 g of the positive electrode active substance 20 in the first discharging operation.

When the charge-discharge cycle is performed ten times, the discharge capacity of the positive electrode 2 per 1 g of the positive electrode active substance 20 in the tenth discharging operation is preferably 0.8 times or more, more preferably 0.9 times or more, still more preferably 1 time or more the discharge capacity per 1 g of the positive electrode active substance 20 in the first discharging operation.

According to the positive electrode active substance 20 of the present embodiment, the positive electrode active substance is formed by adding an additive containing boron element to a lithium composite oxide or a precursor of the lithium composite oxide such that the amount of boron is more than 0.00075 equivalents and 0.2 equivalents or less with respect to 1 equivalent of the total of Mn and Ni of the lithium composite oxide. Thus, the positive electrode active substance has an initial charge capacity larger than that of the conventional technology while having a layered rock-salt structure.

According to the positive electrode active substance 20 of the present embodiment, an additive containing boron element is added to a lithium composite oxide having a layered rock-salt structure or a precursor of the lithium composite oxide such that the amount of boron is more than 0.00075 equivalents and 0.2 equivalents or less with respect to 1 equivalent of the total of Mn and Ni of the lithium composite oxide, and the mixture is calcined at a temperature of 850°C or higher. Thus, the positive electrode active substance has a higher charge capacity and a higher discharge capacity as compared with a lithium composite oxide having a layered rock-salt structure in which no additive is added or a lithium composite oxide having a layered rock-salt structure in which the additive is added in a small amount of 0.00075 equivalents or less, and comes closer to a steady state in the charging of the second cycle, thus can exhibit, in the charging and discharging after the charging of the second cycle, a closer discharge capacity value to that in the steady state.

In the embodiment described above, the coating layer 31 is coated on the surface of the oxide active substance 30 in the positive electrode active substance 20, but the present invention is not limited to this configuration. In the positive electrode active substance 20, the surface of the oxide active substance 30 does not have to be coated with the coating layer 31.

In the embodiment described above, the separator 6 is interposed between the positive electrode 2 and the negative electrode 3, but the present invention is not limited to this configuration. When the electrolyte 5 is a solid electrolyte or the like, the separator 6 does not have to be provided.

In the embodiment described above, each component member can be freely replaced or added between the embodiments as long as it is included in the technical scope of the present invention.

### EXAMPLES

Hereinafter, the present invention will be specifically described with reference to Examples. The present invention is not limited to the Examples shown below, and can be appropriately modified without changing the gist thereof.

### (Example 1)

First, a Ni/Mn intermediate (manufactured by Tosoh Corporation, Ni : Mn = 1 : 3, 20 g), lithium carbonate (14.04 g, 188.13 mmol), and lithium tetraborate (manufactured by Tokyo Chemical Industry Co., Ltd., 0.0697 g, 0.4121 mmol) were weighed, and they were mixed in an automatic mortar for 60 minutes, whereby a mixed powder was formed. That is, mixing was performed such that the amount of boron was 0.0075 equivalents with respect to 1 equivalent of the total of Mn and Ni.

Subsequently, the mixed powder was filled in an alumina box-sagger and heated at 900°C for 12 hours in an air atmosphere using a muffle furnace (FP411 manufactured by Yamato Scientific Co., Ltd.). Thereafter, the obtained material was naturally cooled in the furnace to obtain a positive electrode active substance of lithium nickel manganese oxide.

Next, a slurry was produced in which a mixture containing the obtained positive electrode active substance, acetylene black as a conductive auxiliary agent, and polyvinylidene fluoride (PVdF) as a binder in solid content concentrations of 88 parts by weight, 6 parts by weight, and 6 parts by weight, respectively, was dispersed in N-methyl-2-pyrrolidone (NMP).

The binder was adjusted to an N-methyl-2-pyrrolidone (NMP) solution having a solid concentration of 5 weight%, and NMP was further added to adjust the viscosity so as to facilitate the coating described later.

After the slurry was coated to a 15 µm aluminum foil, the aluminum foil was dried in an oven at 120°C, and then vacuum-dried at 170°C, whereby a positive electrode was obtained. The positive electrode was designated as Example 1.

### (Example 2)

The same procedure as in Example 1 was performed except that lithium tetraborate was mixed such that the amount of boron was 0.0375 equivalents with respect to 1 equivalent of the total of Mn and Ni when a mixed powder was formed. The obtained positive electrode was designated as Example 2.

### (Example 3)

The same procedure as in Example 1 was performed except that lithium tetraborate was mixed such that the amount of boron was 0.075 equivalents with respect to 1 equivalent of the total of Mn and Ni when a mixed powder was formed. The obtained positive electrode was designated as Example 3.

### (Comparative Example 1)

The same procedure as in Example 1 was performed except that lithium tetraborate was not added. The obtained positive electrode was designated as Comparative Example 1. That is, in Comparative Example 1, the amount of boron was 0 with respect to 1 equivalent of the total of Mn and Ni.

### (Comparative Example 2)

The same procedure as in Example 1 was performed except that lithium tetraborate was mixed such that the amount of boron was 0.00075 equivalents with respect to 1 equivalent of the total of Mn and Ni when a mixed powder was formed. The obtained positive electrode was designated as Comparative Example 2.

### (Evaluation of Cycle Characteristics)

In a glove box, the positive electrodes of Example 1 and Comparative Example 1 were used as a working electrode, and lithium metal was used as a counter electrode. Using these electrodes, the positive electrode, the separator, and the lithium metal were stacked in this order and disposed in a test cell. A nonaqueous electrolytic solution (ethylene carbonate/propylene carbonate/ethyl methyl carbonate =15/15/70 (volume ratio), lithium hexafluorophosphate LiPF6: 1 mol/L) was placed in the test cell, whereby a half-cell was produced.

The produced half-cell was connected to a charge and discharge device (HJ1005SD8 manufactured by Hokuto Denko Corporation), and a charge-discharge cycle operation was performed.

In an environment of 25°C, a charging operation and a discharging operation were alternately repeated ten times. In the charging operation, constant current charging was performed at a current density of 10 mA/g until the battery voltage reached an upper limit voltage of 4.8 V, and then constant voltage charging was performed until the current density attenuated to 1 mA/g while maintaining 4.8 V. In the discharging operation, constant current discharging was performed at a current density of 10 mA/g and discharging was stopped when the battery voltage reached a lower limit voltage of 2.0 V.

Charging and discharging were performed starting from the charging operation, and a combination of one charging operation and one discharging operation was regarded as one cycle.

The charge-discharge curves of Example 1 and Comparative Example 1 are shown in Fig. 1, and the evaluation results are shown in Table 1.

### [Table 1]

**TABLE 1**

| | Example 1 | | Example 2 | | Example 3 | | Comparative Example 1 | | Comparative Example 2 | |
|---|---|---|---|---|---|---|---|---|---|---|
| | Charge capacity (mAh/g) | Discharge capacity (mAh/g) | Charge capacity (mAh/g) | Discharge capacity (mAh/g) | Charge capacity (mAh/g) | Discharge capacity (mAh/g) | Charge capacity (mAh/g) | Discharge capacity (mAh/g) | Charge capacity (mAh/g) | Discharge capacity (mAh/g) |
| Boron equivalent | 0.0075 | | 0.0375 | | 0.075 | | 0 | | 0.00075 | |
| First cycle | 289.5 | 176.6 | 327.7 | 184.8 | 360.0 | 208.1 | 168.7 | 108.5 | 153.8 | 95.0 |
| Second cycle | 207.5 | 195.6 | 201.4 | 182.6 | 220.1 | 204.8 | 134.2 | 130.5 | 115.0 | 111.1 |
| Third cycle | 219.7 | 207.1 | 196.7 | 182.2 | 220.2 | 208.1 | 157.2 | 150.1 | 129.9 | 125.0 |
| Fourth cycle | 223.8 | 213.3 | 184.6 | 176.4 | 220.6 | 210.7 | 173.8 | 166.4 | 140.0 | 135.7 |
| Fifth cycle | 225.5 | 216.4 | 185.9 | 181.5 | 220.1 | 211.3 | 184.6 | 178.7 | 148.0 | 143.7 |
| Sixth cycle | 227.0 | 218.9 | 190.3 | 170.8 | 225.8 | 216.8 | 197.4 | 191.0 | 153.2 | 149.4 |
| Seventh cycle | 228.4 | 220.6 | 190.3 | 183.3 | 215.5 | 210.3 | 205.3 | 199.9 | 150.2 | 148.7 |
| Eighth cycle | 230.6 | 223.4 | 179.9 | 174.5 | 226.6 | 218.2 | 213.2 | 207.7 | 162.0 | 156.7 |
| Ninth cycle | 232.8 | 225.6 | 176.7 | 172.9 | 229.2 | 221.0 | 218.5 | 214.1 | 165.2 | 160.3 |
| Tenth cycle | 234.2 | 227.3 | 184.5 | 177.3 | 229.6 | 222.2 | 222.9 | 218.5 | 167.6 | 162.7 |
| Two-cycle capacity change rate | 0.7 | 1.1 | 0.6 | 1.0 | 0.6 | 1.0 | 0.8 | 1.2 | 0.7 | 1.2 |
| Ten-cycle capacity change rate | 0.8 | 1.3 | 0.6 | 1.0 | 0.6 | 1.1 | 1.3 | 2.0 | 1.1 | 1.7 |

In Examples 1 to 3, as shown in Table 1, the charge capacity and the discharge capacity were significantly improved in any cycle from the first cycle to the tenth cycle as compared with Comparative Example 1 in which boron was not added. On the other hand, in Comparative Example 2, the charge capacity and the discharge capacity were lowered as compared with Comparative Example 1 although boron was added. From this, it is considered that when the amount of boron added is too small, the charge capacity and the discharge capacity are lowered conversely, and it is necessary to add an appropriate amount of boron to improve the charge capacity and the discharge capacity.

In Example 1, the ratio of the charge capacity at the second cycle to the charge capacity at the first cycle (hereinafter, also referred to as two-cycle charge capacity change rate) was 0.7, which was smaller than the two-cycle charge capacity change rate (0.8) in Comparative Example 1.

In Examples 2 and 3 and Comparative Example 2 as well, the two-cycle charge capacity change rate was smaller than the two-cycle charge capacity change rate of Comparative Example 1.

In Example 1, the ratio of the discharge capacity at the second cycle to the discharge capacity at the first cycle (hereinafter, also referred to as two-cycle discharge capacity change rate) was 1.1, which was smaller than the two-cycle discharge capacity change rate (1.2) in Comparative Example 1.

In Examples 2 and 3 as well, the two-cycle discharge capacity change rate was smaller than the two-cycle discharge capacity change rate in Comparative Example 1. In Comparative Example 2, the two-cycle discharge capacity change rate was not different from that of Comparative Example 1.

In Example 1, the ratio of the charge capacity at the tenth cycle to the charge capacity at the first cycle (hereinafter, also referred to as ten-cycle charge capacity change rate) was 0.8, which was smaller than the ten-cycle charge capacity change rate (1.3) in Comparative Example 1.

In Examples 2 and 3 and Comparative Example 2 as well, the ten-cycle charge capacity change rate was smaller than the ten-cycle charge capacity change rate in Comparative Example 1.

In Examples 1 to 3, the ten-cycle charge capacity change rate was smaller than that in Comparative Example 2 by 0.3 or more.

In Example 1, the ratio of the discharge capacity at the tenth cycle to the discharge capacity at the first cycle (hereinafter, also referred to as ten-cycle discharge capacity change rate) was 1.3, which was smaller than the ten-cycle discharge capacity change rate (2.0) in Comparative Example 1.

In Examples 2 and 3 and Comparative Example 2 as well, the ten-cycle discharge capacity change rate was smaller than the ten-cycle discharge capacity change rate in Comparative Example 1.

In Examples 1 to 3, the ten-cycle discharge capacity change rate was smaller than that in Comparative Example 2 by 0.4 or more.

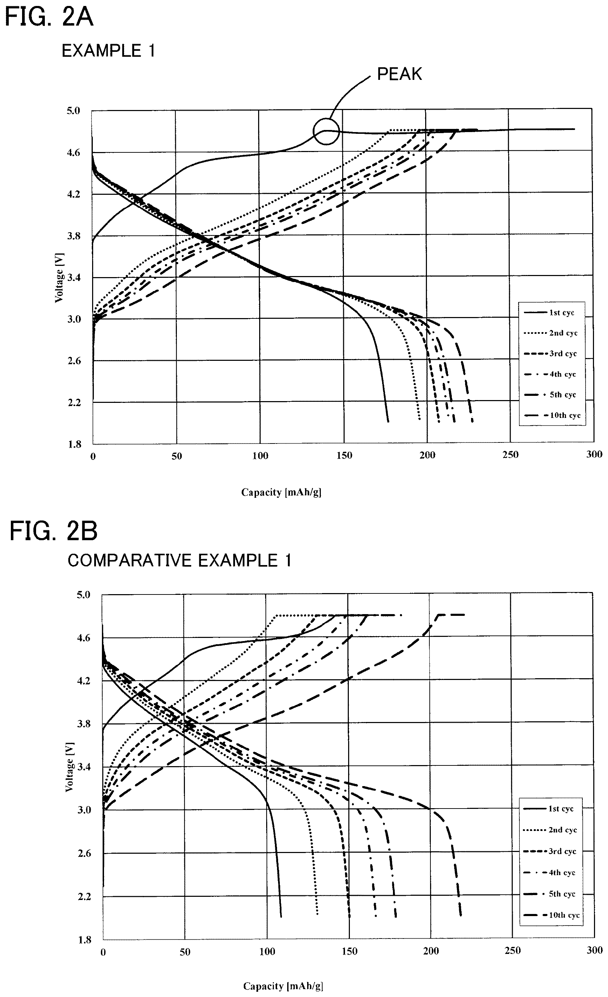

In Comparative Example 1, as shown in Fig. 2B, the charging curve monotonously increased, and no peak was observed in the range of 4.7 V or more and 4.8 V or less, whereas in Example 1, as shown in Fig. 2A, a peak was observed in the range of 4.7 V or more and 4.8 V or less in the charging curve.

In Comparative Example 1, by repeating charging and discharging as shown in Fig. 2B, the capacity gradually changed toward the capacity at the tenth cycle, whereas in Example 1, as shown in Fig. 2A, a value close to the capacity at the tenth cycle was obtained at the charging of the second cycle, and the charging curve and the discharging curve after the second cycle had a form with high reproducibility.

From the above results, it was found that the addition of an additive containing boron element to a precursor of a lithium composite oxide having a layered rock-salt structure represented by Li₂Mn₁₋ₓNiₓO₃ (0 ≤ x < 1) such that the amount of boron is more than 0.00075 equivalents with respect to 1 equivalent of the total of Mn and Ni of the lithium composite oxide and the calcination of the mixture at a temperature of 850°C or higher achieves a positive electrode active substance having a higher initial charge capacity and a higher initial discharge capacity as compared with a lithium composite oxide having a layered rock-salt structure in which no additive is added, and the positive electrode active substance comes closer to a steady state in the charging of the second cycle, thus exhibits, in the charging and discharging after the charging of the second cycle, a closer discharge capacity value to that in the steady state.

### EXPLANATION OF REFERENCE SIGNS

20: positive electrode active substance
30: oxide active substance
31: coating layer

## Claims

1. A positive electrode active substance obtained by adding an additive containing boron element to a lithium composite oxide having a layered rock-salt structure represented by Li₂Mn₁₋ₓNiₓO₃ (0 ≤ x < 1) or a precursor of the lithium composite oxide, such that an amount of boron is more than 0.00075 equivalents and 0.2 equivalents or less with respect to 1 equivalent of a total of Mn and Ni of the lithium composite oxide, and performing heating and sintering.

2. The positive electrode active substance according to claim 1, the positive electrode active substance being obtained by adding the additive to the lithium composite oxide or the precursor of the lithium composite oxide such that the amount of boron is 0.005 equivalents or more and 0.1 equivalents or less with respect to 1 equivalent of the total of Mn and Ni of the lithium composite oxide, and performing heating and sintering.

3. The positive electrode active substance according to claim 1 or 2, the positive electrode active substance being obtained by performing heating and sintering at a temperature of 850°C or higher.

4. The positive electrode active substance according to claim 1 or 2, wherein a charging curve showing a voltage based on lithium metal with respect to a charge capacity when constant current charging is performed at a current density of 10 mA/g for the first time has a peak in a range of 4.7 V or more and 4.8 V or less.

5. The positive electrode active substance according to claim 1 or 2, wherein an initial charge capacity per 1 g is 250 mAh/g or more when constant current charging is performed at a current density of 10 mA/g until a voltage reaches 4.8 V based on lithium metal and constant voltage charging is performed until the current density attenuates to 1 mA/g while 4.8 V based on lithium metal is maintained.

6. The positive electrode active substance according to claim 5, wherein an initial discharge capacity per 1 g is 150 mAh/g or more when constant current charging is performed at a current density of 10 mA/g until the voltage reaches 4.8 V based on lithium metal, then constant voltage charging is performed until the current density attenuates to 1 mA/g while 4.8 V based on lithium metal is maintained, and further constant current discharging is performed at a current density of 10 mA/g until the voltage reaches 2.0 V based on lithium metal.

7. The positive electrode active substance according to claim 1 or 2,
wherein when a charge-discharge cycle is performed ten times, a discharge capacity per 1 g in the tenth discharging operation is 1.5 times or less a discharge capacity per 1 g in the first discharging operation, the charge-discharge cycle including:
a charging operation of performing constant current charge at a current density of 10 mA/g until a voltage reaches 4.8 V based on lithium metal and then performing constant voltage charging until the current density attenuates to 1 mA/g while 4.8 V based on lithium metal is maintained and;
a discharging operation of performing constant current discharging at a current density of 10 mA/g until the voltage reaches 2.0 V based on lithium metal.

8. The positive electrode active substance according to claim 1 or 2, wherein the additive contains lithium tetraborate.

9. The positive electrode active substance according to claim 1 or 2, wherein a part of Mn and/or Ni in the lithium composite oxide is substituted with boron element.

10. The positive electrode active substance according to claim 1 or 2, wherein a boron compound is attached to the lithium composite oxide.
